# EUROPEAN PATENT APPLICATION

(11) **EP 3 081 300 A1**
(43) Date of publication of application: **19.10.2016**
(21) Application number: 13828790.9
(22) Date of filing: 11.12.2013
(51) Int. Cl.: B01L 3/00, F16K 99/00

(54) **MULTIPLEXED VALVE FOR MICROFLUIDIC DEVICES**

(71) Applicant: Ikerlan, S. Coop, 20500 Arrasate-Mondragon, Guipúzcoa (ES)
(72) Inventor: EZKERRA FERNÁNDEZ, Aitor, E-20500 Arrasate-Mondragón (Guipúzcoa) (ES); ETXEBARRÍA ELEZGARAI, Jaione, E-20500 Arrasate-Mondragón (Guipúzcoa) (ES); BERGANZO RUIZ, Javier, E-20500 Arrasate-Mondragón (Guipúzcoa) (ES)
(74) Representative: ABG Patentes, S.L.
(86) International application number: PCT/ES2013/070868
(87) International publication number: WO 2015/086863

(57) **Abstract**

The present invention is a multiplexed valve for microfluidic devices suitable for establishing the fluidic communication or the cut-off of said fluidic communication between a microfluidic inlet and a plurality of microfluidic outlets, or a plurality of microfluidic inlets and a microfluidic outlet, or a plurality of microfluidic inlets and a plurality of microfluidic outlets.

The structure of this multiplexed valve is characterized by a preferably stratified structure formed by a support base, an elastically deformable membrane and a rigid movable part. This rigid movable part allows a set of positions giving rise to the combinations of conditions for the selective opening or closing of the fluidic communications between the inlets and the outlets.

## Description

### Object of the Invention

The present invention is a multiplexed valve for microfluidic devices suitable for establishing the fluidic communication or the cut-off of said fluidic communication between a microfluidic inlet and a plurality of microfluidic outlets, or a plurality of microfluidic inlets and a microfluidic outlet, or a plurality of microfluidic inlets and a plurality of microfluidic outlets.

The structure of this multiplexed valve is characterized by a preferably stratified structure formed by a support base, an elastically deformable membrane and a rigid movable part. This rigid movable part allows a set of positions giving rise to combinations of conditions for the selective opening or closing of the fluidic communications between the inlets and the outlets.

### Background of the Invention

One of the technical fields being more intensively developed is the field of microfluidic devices and particularly the devices known as Lab-on-a-Chip. These devices are formed by chambers and microfluidic conduits which allow carrying out experiments and tests on fluidic samples such as biological samples.

Some common manipulations that are required in these devices involve the selective transfer of a fluidic sample or a portion thereof between two chambers or the establishment of the communication between a specific inlet and outlet. This control is more complicated when the operations on the microfluidic device require applying steps that involve the selective opening and closing between a microfluidic inlet and a plurality of microfluidic outlets, or a plurality of microfluidic inlets and a microfluidic outlet, or a plurality of microfluidic inlets and a plurality of microfluidic outlets.

These combinations for selective opening and closing are usually controlled by means of multiplexed valves that allow automating the tasks, for example.

Known multiplexed valves have a stratified structure formed by a support base incorporating microfluidic ducts and , in particular, open chambers, which give rise to multiplexed valves due to their special configuration.

That cavity located in a body, for example a support base, which is directly accessible from outside said body will be interpreted as an open chamber throughout this description. In other words, regardless of the inlets and outlets that are in communication with the chamber, there is at least one hole which allows accessing the cavity from outside the body.

The most common configuration of the support bases is a plate with microfluidic conduits and inner chambers. In this plate configuration, an open chamber is an accessible cavity on one of the main faces of the plate. This hole is usually closed by means of a membrane located on the surface of the plate where said hole or cavity is located, giving rise to a chamber. The open chamber thus defines this structure even though, once covered by the membrane it is no longer open but is rather closed by said membrane. According to this description, the open chamber is the way of identifying the chamber configured on the support base whether or not it is closed by the membrane.

In these multiplexed valves known in the state of the art, the membrane covering the open chamber is a composite membrane, i.e., it is formed by two or more stacked individual membranes. Each of these individual membranes has a hole or window. The individual membranes allow relative movement with respect to one another through relative sliding between the contacting surfaces such that the composite membrane has an open hole if the positions of the holes or windows of the individual membranes coincide with one another.

Such multiplexed valves have several drawbacks among which are found the high degree of friction between all the contacting surfaces with relative sliding and, the biggest problem of all, that all the contacting surfaces of the individual membranes must not have any gap whatsoever to assure leak-tightness.

The present invention solves the foregoing problems with a different structure that only requires an elastically deformable membrane.

### Description of the Invention

The present invention is a multiplexed valve for microfluidic devices having a structure comprising:
*a support base where said support base comprises*
   - *a microfluidic inlet and a plurality of microfluidic outlets, or a plurality of microfluidic inlets and a microfluidic outlet, or a plurality of microfluidic inlets and a plurality of microfluidic outlets,*
   - *at least one open chamber located on a surface of the support base putting one of the microfluidic inlets and one of the microfluidic outlets in fluidic communication.*

The embodiments of greatest interest correspond to a support base configured in the form of a plate where in most cases this support itself is what integrates a part of or all the microfluidic components of a Lab-on-a-Chip device. Nevertheless, it is possible that a support base only has one multiplexed valve. Multiplexing allows connecting one or more microfluidic inlets and one or more microfluidic outlets where the combination of conditions for opening and closing each microfluidic inlet and microfluidic outlet is predetermined or can be externally operated.

In the embodiment of greatest interest there are at least two possible combinations of conditions for opening/closing where each combination defines the inlets that are open or closed, the outlets that are open or closed and, the inlets and outlets that are fluidically communicated with one another. At least one microfluidic inlet and one microfluidic outlet are fluidically communicated through an open chamber.

The multiplexed valve also comprises:
*an elastically deformable membrane arranged on the support base and covering the at least one open chamber where the open chamber and the elastically deformable membrane are suitable for cutting off* or *reducing the fluidic communication between the microfluidic inlet and the microfluidic outlet of the open chamber by pressuring on a region of the elastically deformable membrane causing the deformation thereof and the narrowing of the fluidic passage through the open chamber;*
*at least one pressure element for causing the deformation of the elastically deformable membrane.*

The elastically deformable membrane has two functions, the first function is covering the at least one open chamber which forms part of the valve by closing its cavity and resulting in an inner cavity.

The second function is regulating the flow between the at least one microfluidic inlet at the cavity and the at least one microfluidic outlet of the open cavity. The regulation takes place through the deformation of the elastically deformable membrane due to the action of the pressure element. The pressure element is an element outside the cavity and acts on the outer surface of the elastically deformable membrane, i.e., the surface located on the face opposite the face the surface of which is orientated to the cavity of the open chamber. When the pressure element exerts pressure on the surface of the elastically deformable membrane, said membrane deforms, invading the cavity or a part of the cavity of the open chamber, thus narrowing the passage between the microfluidic inlet and the microfluidic outlet opening into said cavity.
*a rigid movable part located on the elastically deformable membrane allowing at least two positions:*
- *a first position in which it establishes that the pressure element is suitable for acting according to a first combination of conditions for opening*/*closing between the microfluidic inlet or inlets and the microfluidic outlet or outlets; and,*
- *a second position in which it establishes that the pressure element is suitable for acting according to a second combination of conditions for opening*/*closing between the microfluidic inlet or inlets and the microfluidic outlet or outlets other than the first combination.*

The movable part is what determines at least two different combinations of open/closed conditions for the inlets and the outlets. The movable part establishes the open/closed conditions for the inlets and the outlets according to a specific combination, adopting a position in which the operating element or the operating elements act or do not act on the inlet or outlet. In other words, it adopts at least two positions and in each position the movable part establishes the outlets and inlets that are open and those that are closed.

A preferred example makes use of a movable part in the form of a plate and the preferred movement of the movable part is a rotational movement where the rotation is established about an axis perpendicular to the plane in which the plate is located.

The rotational movement of the rigid movable part in one and the same direction allows establishing the combinations for opening and closing the inlets and outlets that are periodically repeated as they adopt the same positions again after a complete turn. This embodiment also allows the operating means which move the movable part to be motors acting on an axis of rotation and as a result the combinations for opening and closing follow a periodic sequence.

Various ways for carrying out the invention are shown with support in the drawings.

### Description of the Drawings

The foregoing and other advantages and features of the invention will be better understood from the following detailed description of a preferred embodiment provided only by way of illustrative and non-limiting example in reference to the attached drawings:
Figure 1A schematically shows in a detailed perspective view a first embodiment of the invention where the concealed elements have been depicted in dotted line.
Figure 1B shows a cross-section of the first embodiment showing the section of the open chamber. Figure 1C shows an enlarged detail of the seat between a tubular prolongation of the inlet at the open chamber and the membrane.
Figure 2A schematically shows in a detailed perspective view a second embodiment of the invention where the concealed elements have been depicted in dotted line.
Figure 2B shows a cross-section of the second embodiment, being possible to see the section of two of the open chambers. Figure 2C shows an enlarged detail of the closing of the open chamber and the membrane.
Figure 3 shows a third embodiment formed by two multiplexed valves connected to one another. A first valve with four inlets and one outlet and a second valve with one inlet and four outlets where the outlet of the first valve is in fluidic connection with the inlet of the second valve.
Figure 4 shows a fluidic device with the valves shown in the preceding figure and the operating means acting on both valves.

### Detailed Description of the Invention

The invention is a multiplexed valve for microfluidic devices which allows flow sequencing.

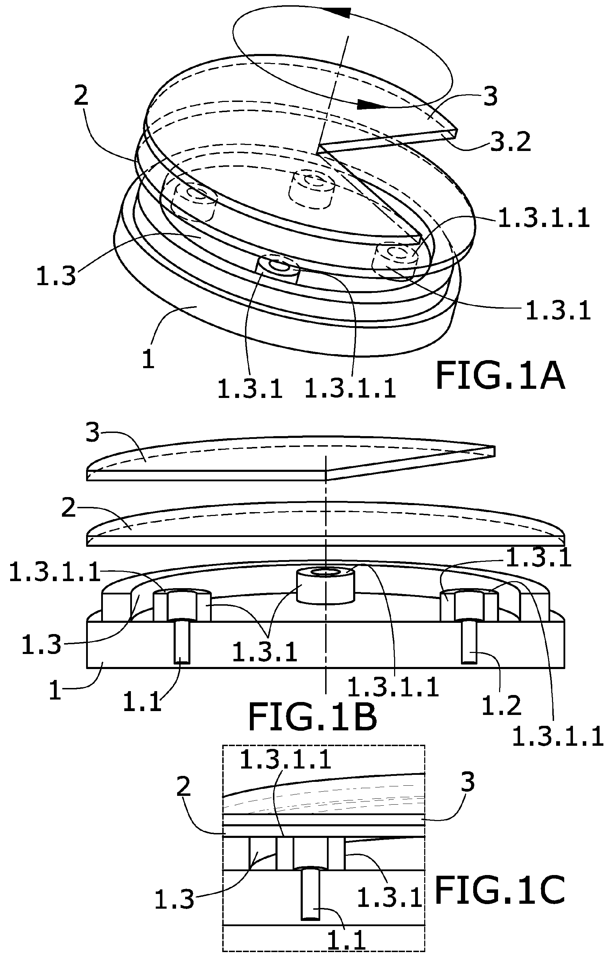

Figures 1A, 1B and 1C show a first embodiment. Figure 1A shows an exploded perspective view of the valve according to this first embodiment where in the lower portion, according to the orientation chosen for depicting the device in the drawing, there is a support base (1) configured mainly according to a planar structure.

The support base (1) has an open chamber (1.3) defined in this embodiment by a cavity defined on one of its faces, the upper face. The cavity is defined by means of a wall in the form of a circular projection perimetrically surrounding the chamber.

The open chamber (1.3) has four fluidic communications where each of them can be a microfluidic inlet (1.1) or a microfluidic outlet (1.2). At least one of the fluidic communications is a microfluidic inlet (1.1) and at least one of the fluidic communications is a microfluidic outlet (1.2).

In this embodiment, each of these microfluidic communications accesses the open chamber (1.3) through the base of said open chamber (1.3) and shows a tubular prolongation (1.3.1) such that the microfluidic communication prolongs by means of this tubular prolongation (1.3.1).

The perimetral wall demarcating the open chamber (1.3) has a support seat allowing an elastically deformable membrane (2) which closes the open chamber (1.3) to rest on said seat resulting in an inner chamber.

In turn, at their end spaced from the base of the open chamber (1.3), shown in the upper part of the drawings, the tubular prolongations (1.3.1) also finish in a support seat suitable for the elastically deformable membrane (2) to rest thereon. The elastically deformable membrane (2) resting under pressure on the seat (1.3.1.1) of the tubular prolongation (1.3.1) closes the inlet or outlet corresponding with the microfluidic communication that reaches the inside of the tubular prolongation (1.3.1). If the elastically deformable membrane (2) does not press against the seat (1.3.1.1) of the tubular prolongation (1.3.1), the elastically deformable membrane (2) allows the spacing of the seat (1.3.1.1) and therefore the exchange or passage of fluid between the inside of the tubular prolongation (1.3.1) and the open chamber (1.3).

Those fluidic communications the elastically deformable membrane (2) of which is not pressing against the seat (1.3.1.1) of their tubular prolongation (1.3.1) will be open and the fluidic communications the elastically deformable membrane (2) of which is indeed pressing against said seat (1.3.1.1) will be closed. The microfluidic inlet (1.1) and microfluidic outlet (1.2) are distinguished such that the inlet is the fluidic communication with higher pressure. Due to the higher pressure, the fluid will naturally enter through the microfluidic inlet (1.1) until reaching the open chamber (1.3) and will leave from said chamber (1.3) through the fluidic communication or communications that are open, i.e., the microfluidic outlet or outlets (1.2).

Figure 1A shows a rigid movable part (3) arranged on the elastically deformable membrane (2). The part is configured in the form of an incomplete disc due to the existence of a window (3.2) in the form of an angular sector.

The movable part (3) in the form of a circular disc or plate is located above the elastically deformable membrane (2) covering at least the open chamber (1.3). The window (3.2) in the form of an angular sector leaves a part of the elastically deformable membrane (2) accessible from the outside. Particularly, in the embodiment shown in Figure 1A a circular sector corresponding to an angle spanning the position of two of the tubular prolongations (1.3) distributed in a circular manner is left accessible. The number of tubular prolongations (1.3) spanned by the window (3.2) depends on the angle of this window (3.2) and on the number of tubular prolongations (1.3) distributed in a circular manner inside the open chamber (1.3).

According to one embodiment, the lower surface of the movable part (3) is the pressure element that exerts pressure on the elastically deformable membrane (2) pressing against the seats (1.3.1.1) located on the prolongations. All the seats (1.3.1.1) of the tubular prolongations (1.3) the elastically deformable membrane (2) of which is pressed by the movable part (3) are closed. Only the two seats (1.3.1.1) that coincide in projection, according to a direction perpendicular to the main plane of the support base, with the window (3.2) of the movable part (3) are open such that a tubular prolongation (1.3) with its seat (1.3.1.1) open communicates with the microfluidic inlet (1.1) and the other tubular prolongation (1.3) with its seat (1.3.1.1) open communicates with the microfluidic outlet (1.2). Since (1.1) and (1.2) are open, the inlet and the outlet are communicated preventing fluidic passage to the rest of the connections that converge in the open chamber (1.3).

The rotation of the movable part (3) is what orientates the window (3.2) such that it defines the two tubular prolongations (1.3) and the seats (1.3.1.1) thereof that are located under the window (3.2) and are therefore open; and the rest are closed.

According to other embodiments, the movable part (3) has more than one window (3.2) selecting in different angular positions the different tubular prolongations (1.3) with the seats (1.3.1.1) thereof free of pressure from the elastically deformable membrane (2) and therefore open.

According to another embodiment, the movable part (3) does not exert pressure on the elastically deformable membrane (2) to achieve the closing of the tubular prolongations with the seats (1.3.1.1) but rather through the window, a piston (4) is the pressure element having direct access to the elastically deformable membrane (2). The movement of the piston towards the elastically deformable membrane (2) and thus towards the seat accessible through the window (3.2) is what establishes the closing of the fluidic communication corresponding with the tubular prolongation (1.3) of said seat (1.3.1.1).

According to another embodiment, the pressure element is a fluid that exerts pressure on the elastically deformable membrane (2) where said pressurized fluid exerts pressure on a region of the membrane accessible through the window (3.2).

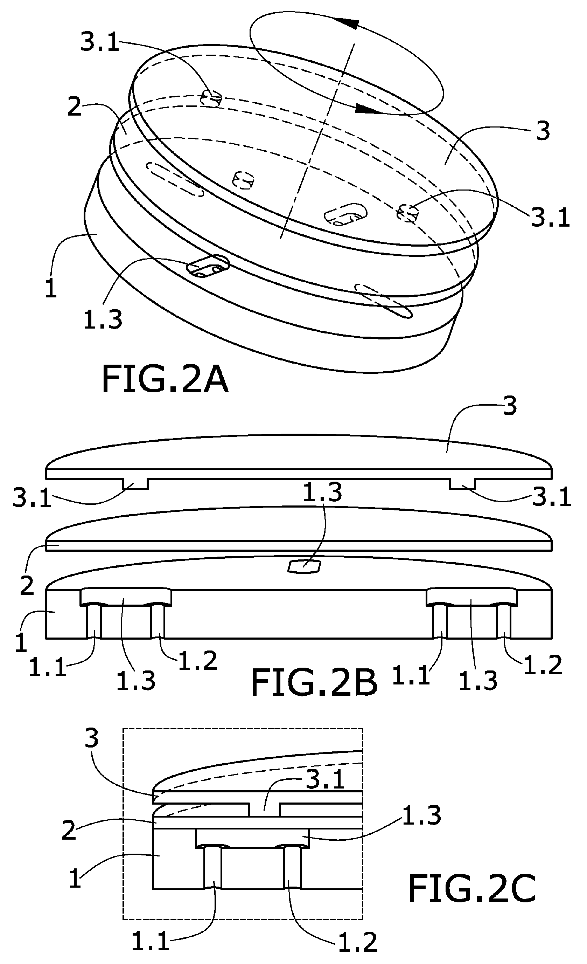

Figures 2A, 2B and 2C show a second embodiment where the support base (1) contains a plurality of open chambers (1.3) distributed in a circular manner below an elastically deformable membrane (2). This embodiment uses only one elastically deformable membrane (2) located on the surface, shown as the upper surface of the support base (1), covering all the open chambers (1.3). This embodiment has four distributed open chambers (1.3).

As shown in the cross-section of Figure 2B and in the detail of Figure 2C, a microfluidic inlet (1.1) and a microfluidic outlet (1.2) open into each open chamber (1.3). The microfluidic inlet (1.1) and the microfluidic outlet (1.2) are communicated through the open chamber (1.3) the cavity of which is closed on the top portion thereof, according to the orientation of the drawing, by means of the elastically deformable membrane (2).

In this embodiment, the movable part (3) is a disc formed by a plate with circular perimeter resting on the elastically deformable membrane (2). This movable part (3) has projections (3.1) on their lower surface, the surface which contacts the elastically deformable membrane (2). The projections (3.1) of the movable part (3) are the pressure elements which deform the elastically deformable membrane (2). If these projections (3.1) are located on one of the open chambers (1.3), said projections (3.1) cause the deformation of the elastically deformable membrane (2) forcing said membrane to invade the cavity of the open chamber (1.3) and therefore narrowing the flow passage between the microfluidic inlet (1.1) and the microfluidic outlet (1.2).

In a specific angular position of the movable part (3), the passage between the microfluidic inlet (1.1) and the microfluidic outlet (1.2) of the open chambers (1.3) with projection will be closed. Among the plurality of open chambers (1.3), there will be one or more chambers with projection (3.1) closing the passage between the microfluidic inlet (1.1) and the microfluidic outlet (1.2) and those without projection leaving the passage between the microfluidic inlet (1.1) and the microfluidic outlet (1.2) open. This combination of open chambers (1.3) with or without projection (3.1) is different from the resulting combination when the movable part rotates adopting a second position.

In the embodiment shown in Figures 2A, 2B and 2C there are four open chambers (1.3) and two projections (3.1) located diametrically opposite. Two diametrically opposite open chambers (1.3) will be open and simultaneously the other two also diametrically opposite open chambers (1.3) will be closed. A first 45° rotation of the movable part (3) closes the open chambers (1.3) that are open and opens those that are closed. A second 45° rotation of the movable part (3) will return to the initial situation. A sequence of 45° rotations in the same direction, for example, determines an alternating change between the opening and closing of each pair of microfluidic inlets (1.1) and microfluidic outlets (1.2) communicated through one and the same open chamber (1.3).

In this embodiment, it is possible to use tubular prolongations in the microfluidic inlet (1.1), in the microfluidic outlet (1.2) or in both (1.1, 1.2) inside the open chamber (1.3) to favor the closing caused by the deformation of the elastically deformable membrane (2) by means of the projection (3.1).

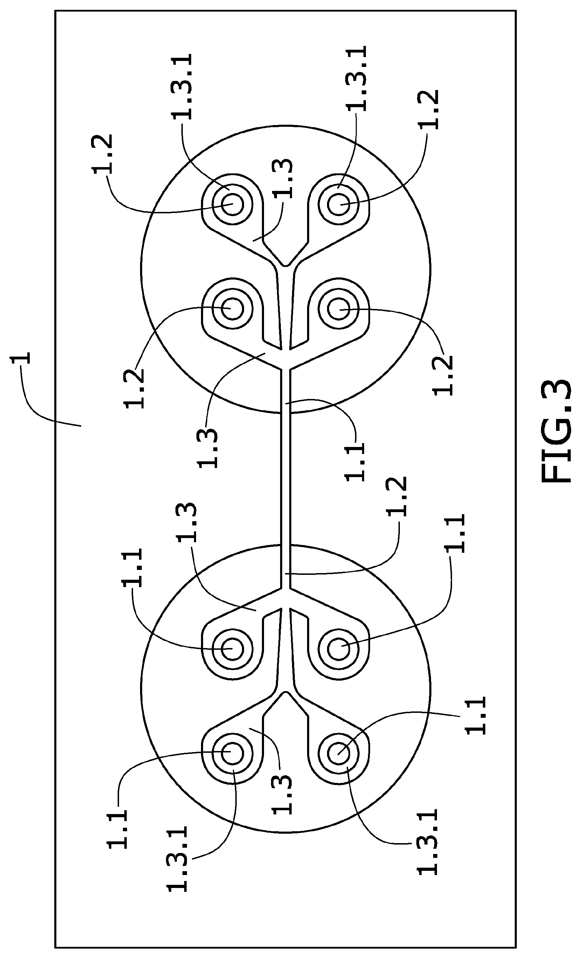

Figure 3 shows a combination of two valves according to an embodiment like the first embodiment where the open chamber (1.3) is a chamber common to four fluidic communications. This open chamber (1.3) further comprises a fifth fluidic communication that is always open.

Instead of a circular configuration, the open chamber (1.3) has a configuration in the form of a tree putting each of the four first microfluidic communications in fluidic communication with the common outlet.

This structure is repeated in both valves where in the first valve the first four microfluidic communications are four microfluidic inlets (1.1) and the fifth microfluidic communication that is always open is a microfluidic outlet (1.2). In the second valve the first four microfluidic communications are four microfluidic outlets (1.1) and the fifth microfluidic communication that is always open is a microfluidic inlet (1.2) in connection with the always open microfluidic outlet of the first valve.

This configuration establishes a contact between the four microfluidic inlets (1.1) of the first valve and the four microfluidic outlets (1.2) of the second valve through the common connection.

The support base (1) is common to both valves forming one and the same microfluidic device.

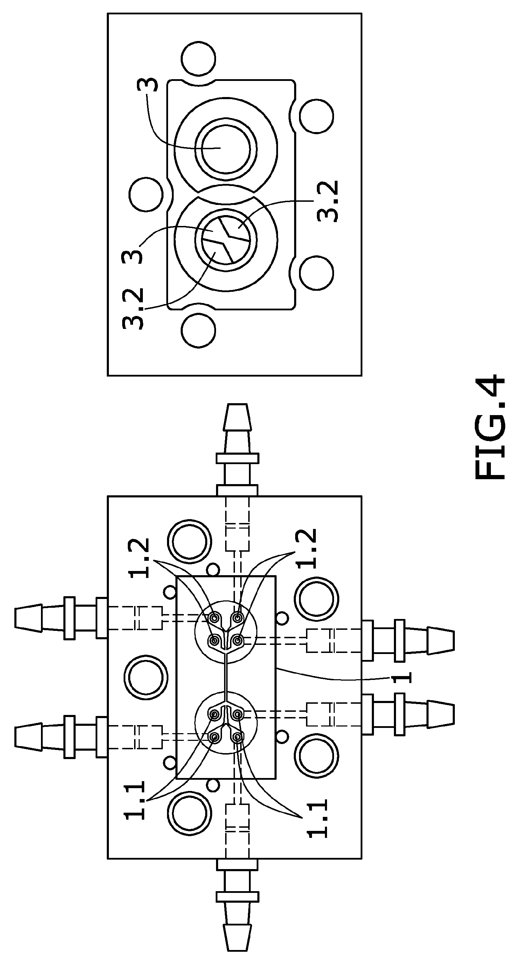

Figure 4 shows the microfluidic device with three of the four microfluidic inlets (1.1) and three of the four microfluidic outlets (1.2) accessible from outside by means of connection adapters. This embodiment only uses three inlets and three outlets of the four inlets and outlet available.

The selective opening of inlets and outlets allows establishing pre-established connections according to combinations linking one or more microfluidic inlets with one or more microfluidic outlets.

Figure 4 shows on the left the device containing the support base (1) and the elastically deformable membranes (2). Said Figure 4 shows on the right the cover of the device, once opened, which contains two movable parts (3) one for each valve which in operating position, when the cover is placed on the support base (1), are located on the corresponding elastically deformable membrane (2) thereof.

In this embodiment, the rotation of one of the movable parts (3) is synchronized with the movement of the other movable part (3) through two meshing cogwheels, each cogwheel being integral with one of the movable parts (3). The first movable part (3) is thus suitable for adopting four different angular positions establishing four combinations of closed/open situations in the microfluidic inlets (1.1) of the first valve. The second movable part (3) is also suitable for adopting four different angular positions establishing other four combinations of closed/open situations in the microfluidic outlets (1.2) of the second valve. The synchronization between the first movable part (3) and the second movable part (3) allows establishing a correspondence between the four combinations of the first valve and the four combinations of the second valve. The synchronized sequential 45° rotation of the movable parts (3) in one and the same direction establishes a periodic sequence of the four correspondences of combinations in each valve.

Figure 4 shows that one of the movable parts (3) is formed by two windows such that, according to one embodiment, the area without windows is what exerts pressure on the elastically deformable membrane to press on the seats (1.3.1.1) of the tubular prolongations (1.3); and the other movable part (3) uses the projections on the surface facing the elastically deformable membrane to achieve the closing. This example shows how the solutions of closing and opening according to the described examples can be combined with one another.

## Claims

1. A multiplexed valve for microfluidic devices comprising:
a support base (1) where said support base (1) comprises
- a microfluidic inlet (1.1) and a plurality of microfluidic outlets (1.2), or a plurality of microfluidic inlets (1.1) and a microfluidic outlet (1.2), or a plurality of microfluidic inlets (1.1) and a plurality of microfluidic outlets (1.2),
- at least one open chamber (1.3) located on a surface of the support base (1) putting one of the microfluidic inlets (1.1) and one of the microfluidic outlets (1.2) in fluidic communication;
an elastically deformable membrane (2) arranged on the support base (1) and covering the at least one open chamber (1.3) where the open chamber (1.3) and the elastically deformable membrane (2) are suitable for cutting off or reducing the fluidic communication between the microfluidic inlet (1.1) and the microfluidic outlet (1.2) of the open chamber (1.3) by pressuring on a region of the elastically deformable membrane (2) causing the deformation thereof and the narrowing of the fluidic passage through the open chamber (1.3);
at least one pressure element (3.1, 4) for causing the deformation of the elastically deformable membrane (2) for closing at least one microfluidic inlet (1.1) or one microfluidic outlet (1.2);
a rigid movable part (3) located on the elastically deformable membrane (2) allowing at least two positions:
- a first position in which it establishes that the pressure element (4) is suitable for acting according to a first combination of conditions for opening/closing between the microfluidic inlet or inlets (1.1) and the microfluidic outlet or outlets (1.2); and,
- a second position in which it establishes that the pressure element (4) is suitable for acting according to a second combination of conditions for opening/closing between the microfluidic inlet or inlets (1.1) and the microfluidic outlet or outlets (1.1) other than the first combination.

2. The valve according to claim 1, where the rigid movable part (3) is a plate with a face located on the elastically deformable membrane (2) and where said rigid movable part (3) comprises at least one window (3.2) in said region where the pressure element is formed by the surface of the face of the rigid movable part (3) located on the elastically deformable membrane (2) for closing at least one microfluidic inlet (1.1) or one microfluidic outlet (1.2); and, leaving the region of the elastically deformable membrane (2) spanned by the window (3.2) free of pressure.

3. The valve according to claim 1, where the rigid movable part (3) is a plate with a face located on the elastically deformable membrane (2) and where said rigid movable part (3) comprises at least one window (3.2) in said region for directly contacting the pressure element with the elastically deformable membrane (2) to deform same and to cause the narrowing of the fluidic passage in the at least one open chamber (1.3) covered by said elastically deformable membrane (2) coinciding with the position of the window (3.2).

4. The valve according to claim 3, where the pressure element is a pressurized fluid.

5. The valve according to claim 3, where the pressure element is a movable piston (4) suitable for pressing on the elastically deformable membrane (2) through the window (3.2) of the rigid movable part (3).

6. The valve according to claim 1, where the rigid movable part (3) is a plate with a face located on the elastically deformable membrane (2) and where the at least one pressure element is a projection (3.1) of the movable part (3) arranged on the face located on the elastically deformable membrane (2) to deform same and to cause the narrowing of the fluidic passage in the open chamber (1.3) covered by said elastically deformable membrane (2).

7. The valve according to any of the preceding claims, where the at least one open chamber (1.3) on a surface of the support base (1) contains tubular prolongations (1.3.1) in the microfluidic inlet (1.1) opening into the chamber (1.3), or in the microfluidic outlet (1.2) opening into the chamber (1.3), or in both (1.1, 1.2), where:
- the tubular prolongation (1.3.1) has at its end a seat (1.3.1.1) suitable for closing the fluidic duct through said tubular prolongation (1.3.1) when the elastically deformable membrane (2) rests on it,
- the seat (1.3.1.1) of the tubular prolongation (1.3.1) is spaced from the elastically deformable membrane (2) when said elastically deformable membrane (2) is not deformed.

8. The valve according to any of the preceding claims, where:
the support base (1) comprises a plurality of microfluidic inlets (1.1) and a plurality of microfluidic outlets (1.2) matching one another such that each microfluidic inlet (1.1) is communicated with a microfluidic outlet (1.2) by means of an open chamber (1.3) on the surface of the support base (1) and covered by the elastically deformable membrane (2),
the rigid movable part (3)is configured such that:
- when positioned in the first position, the pressure element or elements (3.2, 4) cause the deformation of the elastically deformable membrane (2) in the positions coinciding with the position of the open chambers (1.3) which must be closed according to the first combination of conditions for opening/closing each pair of microfluidic inlet and outlet (1.1, 1.2); and,
- when positioned in the second position, the pressure element or elements (3.2, 4) cause the deformation of the elastically deformable membrane (2) in the positions coinciding with the position of the open chambers (1.3) which must be closed according to the second combination of conditions for opening/closing each pair of microfluidic inlet and outlet (1.1, 1.2).

9. The valve according to any of the preceding claims, where the rigid movable part (3) is movable according to a rotation with the axis of rotation perpendicular to the surface on which the elastically deformable membrane (2) rests.

10. The valve according to any of the preceding claims, where the rigid movable part (3) allows an axial movement for changing from one position to another.

11. The valve according to any of the preceding claims and particularly claims 2 and 9, where the rigid movable part (3) allows more than two angular positions such that the projections (3.2) established as the pressure elements defining the first combination of conditions for opening/closing and the second combination for opening/closing between the microfluidic inlet or inlets (1.1) and the microfluidic outlet or outlets (1.2) are applied according to a periodic sequence in a specific direction of rotation.

12. The valve according to any of the preceding claims and particularly claims 6 and 9, where the rigid movable part (3) allows more than two angular positions such that the windows (3.2) defining the first combination of conditions for opening/closing and the second combination for opening/closing between the microfluidic inlet or inlets (1.1) and the microfluidic outlet or outlets (1.2) are applied according to a periodic sequence in a specific direction of rotation.

13. The valve according to any of the preceding claims, where the elastically deformable membrane (2) is made of Teflon, or of a thermoplastic among which are found cyclic olefin polymer (COP), Cyclic olefin copolymer (COC), polymethyl methacrylate (PMMA), polycarbonate (PC), polystyrene (PS), polypropylene (PP), or of an elastomer among which are found polydimethylsiloxane (PDMS) and perfluoropolyether (PFPE).

14. A microfluidic device comprising at least one valve according to any of the preceding claims.

15. A machine comprising a microfluidic device according to claim 14 and the operating means comprising the pressure element or elements suitable for acting on said microfluidic device.
